# EUROPÄISCHE PATENTSCHRIFT

(11) **EP 4 201 583 B1**
(45) Veröffentlichungstag und Bekanntmachung des Hinweises auf die Patenterteilung: **04.02.2026**
(21) Anmeldenummer: 21217580.6
(22) Anmeldetag: 23.12.2021
(51) Int. Cl.: B23Q 3/06, A61C 13/00

(54) **VERFAHREN ZUM EINRICHTEN EINER WERKSTÜCKAUFNAHME**
METHOD FOR SETTING UP A WORKPIECE HOLDER
PROCÉDÉ D'INSTALLATION D'UN PORTE-PIÈCE

(43) Veröffentlichungstag der Anmeldung: 28.06.2023
(73) Patentinhaber: vhf camfacture Aktiengesellschaft, 72119 Ammerbuch (DE)
(72) Erfinder: Butschan, Jens, 73760 Ostfildern (DE)
(74) Vertreter: Zurhorst, Stefan

(56) Entgegenhaltungen:
- EP-B1- 0 455 854
- WO-A1-2009/073498
- DE-U1- 202013 103 515
- US-A1- 2014 080 094
- US-A1- 2014 147 225
- US-A1- 2015 216 638

## Beschreibung

Die Erfindung betrifft ein Verfahren zum Einrichten einer Dentalfräsmaschine

Als Stand der Technik werden in diesem Zusammenhang die DE 20 2013 103515 U1 und die US 2014/147225 A1 genannt.

Zur Herstellung von Zahnersatz, z. B. Kronen, Brücken oder dergleichen, werden in Dentalfräsmaschinen Rohlinge - nachfolgend Blanks bezeichnet - aus verschiedenen Materialien spanend bearbeitet. Grundsätzlich sind derartige Blanks hinsichtlich ihrer Maße genormt, so dass diese in verschiedenen Dentalfräsmaschinen systemübergreifend eingesetzt werden können. Mittlerweile gehen Hersteller dazu über, Dentalfräsmaschinen zu verkaufen, die lediglich Blanks mit von der Norm abweichenden Maßen aufnehmen können. Somit sind Benutzer auf die Verwendung der zur Dentalfräsmaschine zugehörigen Blanks angewiesen. Ein flexibler Einsatz der Dentalfräsmaschine ist nicht möglich.

Ist im bestimmungsgemäßen Betrieb der Dentalfräsmaschine ein Blank in der Werkstückaufnahme zur Bearbeitung eingespannt, muss vor Beginn einer spanenden Bearbeitung sichergestellt sein, dass das Koordinatensystem des realen Werkstücks, hier dem Blank, mit dem Koordinatensystem des programmierten, virtuellen Werkstücks übereinstimmt. Dies setzt eine Kalibrierung der Werkstückaufnahme vor Inbetriebnahme der Dentalfräsmaschine voraus.

Es sind Dentalfräsmaschinen bekannt, zu deren Kalibrierung ein Testwerkstück mit mehreren Referenzpunkten in die Werkstückaufnahme eingespannt wird. Die Referenzpunkte werden durch einen in der Werkzeugaufnahme eingespannten Taster angefahren. Die an den Referenzpunkten aufgenommenen Koordinaten werden in der Steuerung der Dentalfräsmaschine hinterlegt. Auf Basis dieser Referenzpunkte wird das virtuelle Koordinatensystem des Werkstückhalters und damit auch des Werkstückes angepasst. In einem weiteren Kalibrierungsschritt wird ein Referenzwerkstück gefräst, dessen Soll-Geometrie in der Steuerung der Dentalfräsmaschine hinterlegt ist. Die Geometrie des Referenzwerkstückes wird ausgemessen und mit der Soll-Geometrie verglichen. Auf Basis der Abweichung von Ist-Geometrie und Soll-Geometrie des Referenzwerkstückes kann eine Korrektur des virtuellen Koordinatensystems vorgenommen werden. Dieser Schritt kann wiederholt werden, bis das Referenzwerkstück mit ausreichender Genauigkeit gefertigt ist. Eine derartige Kalibrierung der Dentalfräsmaschine ist äußerst zeitaufwendig und kostspielig. Aufgrund der Komplexität einer Kalibrierung muss diese zumeist von Servicetechnikem durchgeführt werden.

Einer nicht beanspruchten Maßnahme liegt die Aufgabe zugrunde, eine Dentalfräsmaschine derart weiterzuentwickeln, dass die Dentalfräsmaschine auf einfache Weise eingerichtet werden kann und zugleich flexibel einsetzbar ist.

Einer nicht beanspruchten Maßnahme liegt die weitere Aufgabe zugrunde, ein Mittel anzugeben, dass ein einfaches Einrichten und zugleich einen flexiblen Einsatz einer Dentalfräsmaschine ermöglicht.

Der Erfindung liegt die Aufgabe zugrunde, ein Verfahren anzugeben, dass eine einfaches Einrichten und zugleich einen flexiblen Einsatz einer Dentalfräsmaschine ermöglicht.

Die Aufgabe bezüglich des Verfahrens wird durch ein Verfahren nach den Merkmalen des Anspruchs 1 gelöst.

Die Dentalfräsmaschine umfasst eine Werkstückaufnahme. Die Werkstückaufnahme weist eine Halterung und einen Adapter auf. Der Adapter ist auf der Halterung befestigt. Der Adapter weist mindestens eine erste Aufnahme zur Befestigung an der Halterung der Dentalfräsmaschine auf. Der Adapter ist in einem ersten Zustand ein Rohling und dazu ausgelegt, von der Dentalfräsmaschine überfräst zu werden.

Vor Inbetriebnahme der Werkstückaufnahme wird der Adapter überfräst und erhält dabei die zur Aufnahme eines Rohlings vorgesehene Kontur. Der Bediener kann beispielsweise in Abhängigkeit seiner zu bearbeitenden Blanks die entsprechende Fräsbearbeitung vorsehen, wodurch die gewünschte Kontur am Adapter erzielt wird. Demnach kann eine beliebige, an die Wünsche des Bedieners angepasste Kontur an dem Adapter vorgesehen werden, die auf die vom Bediener verwendeten Blanks angepasst ist. Folglich ist die Dentalfräsmaschine nicht auf die Bearbeitung spezifischer Blanks beschränkt, sondern für ein breites Blankspektrum einsetzbar.

Ein weiterer Vorteil der Dentalfräsmaschine besteht darin, dass durch das Überfräsen des Adapters eine zusätzliche Kalibrierung der Dentalfräsmaschine entfällt. Die Kontur zur Aufnahme des Werkstückes wird in den Adapter gefräst, wodurch die Lage der Werkstückaufnahme in der Dentalfräsmaschine festgelegt ist. Der Steuerung der Dentalfräsmaschine ist die genaue Lage der Werkstückaufnahme bekannt, da diese der Lage der für die Fräsbearbeitung programmierten Kontur entspricht. Beim Überfräsen des Adapters werden die Ungenauigkeiten der Dentalfräsmaschine auf den Adapter übertragen, wodurch die Nullpunkte von Werkstückaufnahme und Dentalfräsmaschine relativ zueinander abgestimmt sind.

Bevorzugt ist der Adapter in einem zweiten Zustand von der Dentalfräsmaschine überfräst, und umfasst eine Kontur zur Aufnahme eines Blanks. Demnach kann in dem zweiten Zustand des Adapters ein Werkstück in der Werkstückaufnahme aufgenommen werden.

Bevorzugt ist der Adapter aus Kunststoff, insbesondere aus Spritzguss gebildet. Der Adapter weist in Kunststoff eine ausreichende Festigkeit auf, Werkstücke darin während der Fräsbearbeitung halten zu können. Zugleich lässt sich Kunststoff deutlich einfacher fräsen, als alternative Werkstoffe, die für einen solchen Adapter geeignet wären, wie beispielsweise Aluminium oder andere metallische Werkstoffe. Die Halterung ist vorzugsweise aus Aluminium gebildet.

Der Adapter ist insbesondere lösbar auf der Halterung gehalten. Für jede Aufnahmekontur eines Blanks kann ein Adapter mit einer individuellen Kontur zur Aufnahme dieses Blanks bereitgestellt werden. Sollen mehrere Blanks in der Dentalfräsmaschine bearbeitet werden, deren Aufnahmekonturen verschieden sind, kann dann auf einfache Weise der Adapter gewechselt werden und der entsprechende Blank bearbeitet werden.

Die Werkstückaufnahme umfasst mindestens ein Spannmittel. Das Spannmittel ist vorzugsweise auf dem Adapter gehalten. Ist der Blank in der Werkstückaufnahme eingespannt, liegt der Blank auf dem Adapter auf und ist durch das Spannmittel gegen den Adapter gespannt.

Der Adapter ist in seinem ersten Zustand vorzugsweise bogenförmig ausgebildet. Die handelsüblichen Blanks sind kreisrund und scheibenförmig ausgebildet. Der Adapter weist in seinem zweiten Zustand eine dem Blank zumindest teilweise inverse Kontur auf, vorzugsweise ebenfalls bogenförmig, insbesondere halbkreisförmig. Damit eine schnelle Fräsbearbeitung erfolgen kann, ist die Kontur des Adapters in seinem ersten Zustand der Kontur im zweiten Zustand angenähert. Es kann aber auch zweckmäßig sein, eine andere Kontur für den Adapter in seinem ersten Zustand vorzusehen. Dies könnte beispielsweise dann der Fall sein, wenn an dem Adapter andersförmige Werkstücke, beispielsweise mehreckige Werkstücke oder dergleichen gehalten werden sollen.

Es ist vorzugsweise vorgesehen, dass die Halterung mindestens einen seitlichen Anschlag zur Anlage des Adapters aufweist. Bei einem Wechsel eines Adapters, wird dieser an den Anschlag geschoben und anschließend verschraubt. Dadurch kann eine ausreichend genaue Positionierung des Adapters sichergestellt werden. Vorteilhaft sind die Halterung und der Adapter über einen Passstift zueinander ausgerichtet.

Das erfindungsgemäße Verfahren zum Einrichten einer Dentalfräsmaschine sieht eine Dentalfräsmaschine vor, wobei die Dentalfräsmaschine eine Werkstückaufnahme aufweist, wobei die Werkstückaufnahme eine Halterung und einen Adapter umfasst, wobei der Adapter auf der Halterung befestigt ist. Der Adapter ist ein Rohling und wird von der Dentalfräsmaschine derart überfräst, dass an dem Adapter eine Aufnahmekontur zur Aufnahme eines Blanks gebildet ist.

Vorzugsweise wird mindestens ein Spannmittel an dem Adapter befestigt. Das Spannmittel wird insbesondere nach dem Überfräsen des Adapters auf dem Adapter befestigt. Bei der Bearbeitung eines Blanks ist der Blank zwischen dem Adapter und dem mindestens einem Spannmittel gehalten.

Weitere Merkmale der Erfindung ergeben sich aus der Beschreibung und der Zeichnung, in der nachfolgend ein im Einzelnen beschriebenes Ausführungsbeispiel der Erfindung dargestellt ist. Es zeigen:
- Fig. 1: in perspektivischer Darstellung eine Dentalfräsmaschine,
- Fig. 2: in perspektivischer Darstellung die Dentalfräsmaschine nach Fig. 1 mit geöffneter Ladeklappe,
- Fig. 3: in perspektivischer Darstellung eine Anordnung eines Trägers und einer Werkstückaufnahme mit Adapter,
- Fig. 4: in perspektivischer Ansicht von oben einen Adapter als Rohling für die Werkstückaufnahme
- Fig. 5: in perspektivischer Ansicht von unten den Adapter nach Fig. 4,
- Fig. 6: in perspektivischer Darstellung den Adapter in überfrästem Zustand,
- Fig. 7: in perspektivischer Darstellung der Adapter nach Fig. 6 mit Spannmitteln,
- Fig. 8: in perspektivischer Darstellung die Halterung,
- Fig. 9: in einer Ansicht von Vorne der Adapter nach Fig. 6 mit Spannmitteln,
- Fig. 10: in einer perspektivischen Darstellung eine Anordnung des Träger und der Werkstückaufnahme mit eingespanntem Blank,
- Fig. 11: in einer perspektivischen Darstellung eine Anordnung nach Fig. 10 mit geschwenkter Werkstückaufnahme,
- Fig. 12: in einer perspektivischen Darstellung ein alternativer Rohling für eine Werkstückaufnahme und
- Fig. 13: in einer perspektivischen Darstellung ein Adapter mit einer alternativen Aufnahmegeometrie mit Spannmitteln.

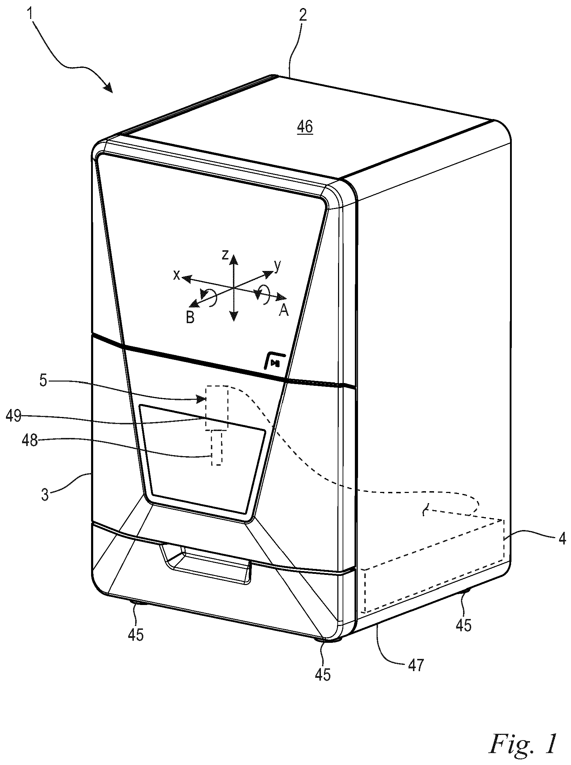

In Fig. 1 ist eine Dentalfräsmaschine 1 gezeigt. Die Dentalfräsmaschine 1 ist zur Herstellung eines Zahnersatzes, insbesondere zum Fertigen von Kronen und Brücken vorgesehen. Ein solcher Zahnersatz wird aus einem Rohling - nachfolgend Blank 15 genannt - gefertigt. Die Dentalfräsmaschine 1 weist ein Gehäuse 2 mit einer Ladeklappe 3 auf. Das Gehäuse 2 begrenzt einen Innenraum 9 der Dentalfräsmaschine 1. Nach Öffnen der Ladeklappe 3 ist der Zugang zu dem Innenraum 9 der Dentalfräsmaschine 1 offen, so dass beispielsweise ein Blank 15 eingelegt oder herausgenommen werden kann. Das Gehäuse 2 der Dentalfräsmaschine weist eine Oberseite 46 und eine Unterseite 47 auf. An der Unterseite 47 der Dentalfräsmaschine 1 sind mehrere Standfüße 45 angeordnet, wobei die Dentalfräsmaschine 1 auf ihren Standfüßen 45 abgestellt ist. Der Begriff "oben" gibt eine von der Unterseite 47 zur Oberseite 46 der Dentalfräsmaschine 1 verlaufende Richtung an. Der Begriff "unten" bezeichnet eine von der Oberseite 46 zur Unterseite 47 der Dentalfräsmaschine 1 verlaufende Richtung.

Wie in Fig. 1 schematisch dargestellt, ist in der Dentalfräsmaschine 1 eine Frässpindel 5 angeordnet. Die Frässpindel 5 umfasst einen Elektromotor 49 und eine vom Elektromotor 49 angetriebene Spindel 48. Die Frässpindel 5 ist im Ausführungsbeispiel über ein nicht näher dargestelltes Antriebssystem im Raum translatorisch, also in Richtung der x-, y- und z-Achsen der Dentalfräsmaschine 1 verstellbar. Im bevorzugten Ausführungsbeispiel ist die Frässpindel 5 vorzugsweise rotatorisch verstellbar und kann um die Freiheitsgrade A und B, also um die x-Achse respektive um die y-Achse geschwenkt werden. Die Freiheitsgrade der Frässpindel sind in Fig. 1 schematisch angedeutet. Ferner umfasst die Dentalfräsmaschine 1 eine in Fig. 1 lediglich schematisch dargestellte Steuereinrichtung 4. Die Steuereinrichtung 4 dient zur elektrischen Versorgung und Steuerung der Frässpindel 5 sowie dem Antriebssystem. Die Frässpindel 5 und das Antriebssystem sind insbesondere über einen elektrischen Anschluss mit der Steuereinrichtung 4 verbunden.

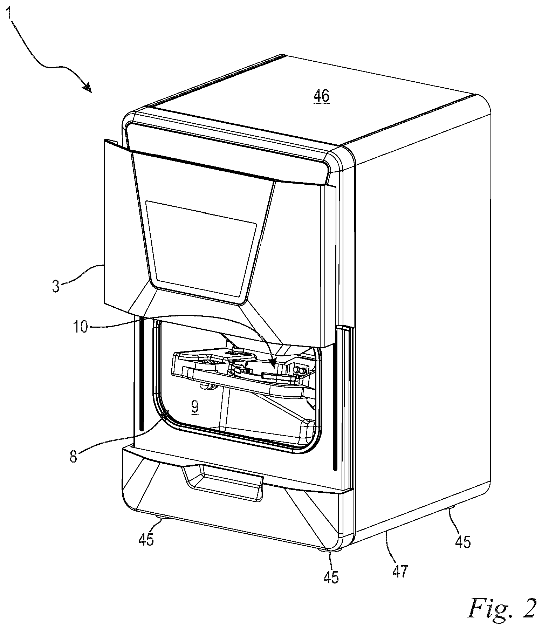

In Figur 2 ist die Dentalfräsmaschine 1 mit geöffneter Ladeklappe 3 gezeigt. Die geöffnete Ladeklappe 3 gibt eine Ladenöffnung 8 frei. Durch die Ladeöffnung 8 können Blanks 15 in den Innenraum 9 der Dentalfräsmaschine 1 geführt werden und in eine Werkstückaufnahme 10 der Dentalfräsmaschine 1 eingelegt werden. Wie in Figur 1 gezeigt, ist die Werkstückaufnahme 10 im Innenraum 9 der Dentalfräsmaschine 1 angeordnet. Die Werkstückaufnahme 10 dient dazu, einen Blank 15 zu halten und derart zu fixieren, dass während der Bearbeitung des Blanks 15 eine ungewollte Verschiebung des Blanks 15 vermieden werden kann. Dadurch wird eine präzise, spanende Bearbeitung des Blanks 15 ermöglicht.

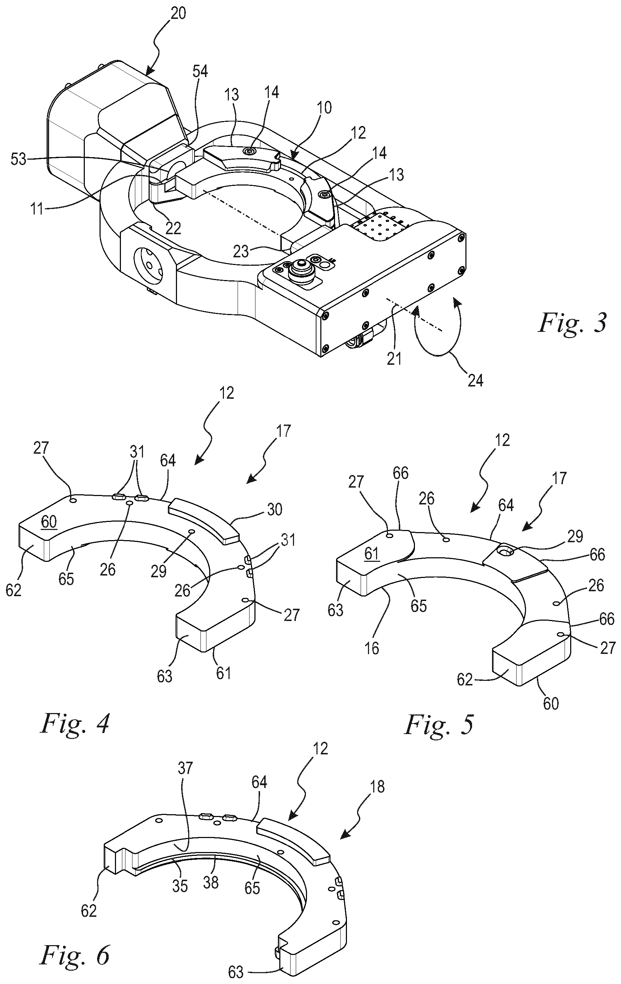

Wie in Fig. 3 gezeigt, ist die Werkstückaufnahme 10 an einem Träger 20 der Dentalfräsmaschine 1 gehalten. Die Werkstückaufnahme 10 ist im bevorzugten Ausführungsbeispiel um eine Schwenkachse 21 schwenkbar an dem Träger 20 gehalten. Die Werkstückaufnahme 10 erstreckt sich von ihrem ersten Ende 22 bis zu ihrem zweiten Ende 23. Die Werkstückaufnahme 10 ist an ihren beiden Enden 22, 23 schwenkbar an dem Träger 20 gelagert. Die Werkstückaufnahme 10 ist mit einem nicht dargestellten Elektromotor, insbesondere einem Schrittmotor, wirkverbunden, wobei der Elektromotor eine Schwenkbewegung 24 der Werkstückaufnahme 10 um die Schwenkachse 21 bewirkt.

Wie in Fig. 3 gezeigt, umfasst die Werkstückaufnahme 10 eine Halterung 11 und einen Adapter 12. Der Adapter 12 ist auf der Halterung 11 angeordnet. Die Werkstückaufnahme 10 umfasst mindestens ein Spannmittel 13. Im vorliegenden Ausführungsbeispiel sind zwei Spannmittel 13 vorgesehen. Die Spannmittel 13 sind dazu ausgebildet, den Blank 15 gegen den Adapter 12 zu spannen. Dabei wird der Blank 15 vorzugsweise unmittelbar zwischen dem Adapter 12 und dem Spannmittel 13 gehalten. Es kann auch vorgesehen sein, lediglich ein Spannmittel 13, aber auch mehr als zwei Spannmittel 13 vorzusehen. Die Spannmittel 13 sind bevorzugt auf dem Adapter 12 befestigt. Alternativ können die Spannmittel 13 auch auf dem Halter 11 befestigt sein. Zur Befestigung eines jeden Spannmittels 13 ist eine Schraubverbindung 14 vorgesehen. In einer alternativen Ausführung der Dentalfräsmaschine 1 kann es zweckmäßig sein, das Spannmittel 13 werkzeuglos an dem Adapter 12 oder der Halterung 11 befestigbar auszubilden. In einer solchen Ausführung kann das Spannmittel 13 beispielsweise über einen Schnellspanner, einen Exzenterhebel oder dgl. befestigt werden.

In Fig. 4 ist der Adapter 12 gezeigt. Der Adapter 12 ist vorliegend als Rohling 16 ausgebildet und befindet sich somit in einem ersten Zustand 17. In diesem ersten Zustand 17 ist der Adapter 12 noch nicht von der Dentalfräsmaschine 1 überfräst. Der Adapter 12 ist vorzugsweise aus einem Kunststoff ausgebildet. Es kann zweckmäßig sein, den Adapter als Spritzguss auszubilden. Die bei der Fräsbearbeitung von Kunststoff auftretenden Zerspanungskräfte sind deutlich geringer als die bei einem Metallwerkstoff. Der Adapter 12 erstreckt sich von seiner ersten Stirnseite 62 bis zu seiner zweiten Stirnseite 63. Im vorliegenden Ausführungsbeispiel ist der Adapter 12 bogenförmig ausgebildet, wobei die konkav geformte Seite des Adapters 12 eine Innenseite 65 ist und die konvex geformte Seite des Adapters 12 eine Außenseite 64. Ferner umfasst der Adapter 12 eine Oberseite 60 und eine Unterseite 61, die über die Stirnseiten 62, 63, die Innenseite 65 und die Außenseite 64 miteinander verbunden sind.

Wie Fig. 4 zeigt, ist im bevorzugten Ausführungsbeispiel der Rohling 16 als Halbzeug ausgebildet und umfasst mehrere vorgefertigte Öffnungen 26, 27, 29 sowie Funktionskonturen 30, 31. So umfasst der Adapter 12 mindestens eine Öffnung 27, über die der Adapter 12 an seiner Unterseite 61 mit der Halterung 11 verschraubbar ist. Damit bildet die Unterseite 61 eine Aufnahme 66 zur Anbindung an die Halterung 11. In der Öffnung 27 ist ein nicht näher dargestelltes Innengewinde vorgesehen. Das Innengewinde ist im bevorzugten Ausführungsbeispiel eine in den Rohling 16 eingegossene Gewindehülse. Im vorliegenden Ausführungsbeispiel sind drei derartige Öffnungen 27 zur Anbindung an die Halterung 11 vorgesehen. Auch eine andere Anzahl an Öffnungen 27 kann zweckmäßig sein. Zudem umfasst der Adapter 12 zwei weitere Öffnungen 26 mit je einem Gewinde, über die die Spannmittel 13 auf der Oberseite 60 des Adapters 12 befestigbar sind.

Wie in Fig. 4 gezeigt, sind auf der Oberseite 60 des Adapters 12 Positionierelemente 31 vorgesehen, auf welchen in montiertem Zustand der Werkstückaufnahme 10 das Spannmittel 13 aufliegt. Ferner ist auf der Oberseite 60 des Adapters 13 ein Mittelsteg 30 ausgebildet, an dessen Enden jeweils ein Spannmittel 13 zur Anlage kommt. Bei der Befestigung eines Spannmittels 13 auf den Adapter 12 wird dieses auf die Positionierelemente 31 gesetzt und umgreift dabei über eine Führungskontur 33 des Spannmittels 13 zumindest teilweise ein Ende des Mittelstegs 30. Das Spannelement 13 ist unter Anlage an den Mittelsteg 30 derart positioniert, dass dieses mit dem Adapter 12 verschraubt werden kann. Dadurch kann eine einfache Montage der Werkstückaufnahme 10 ermöglicht werden.

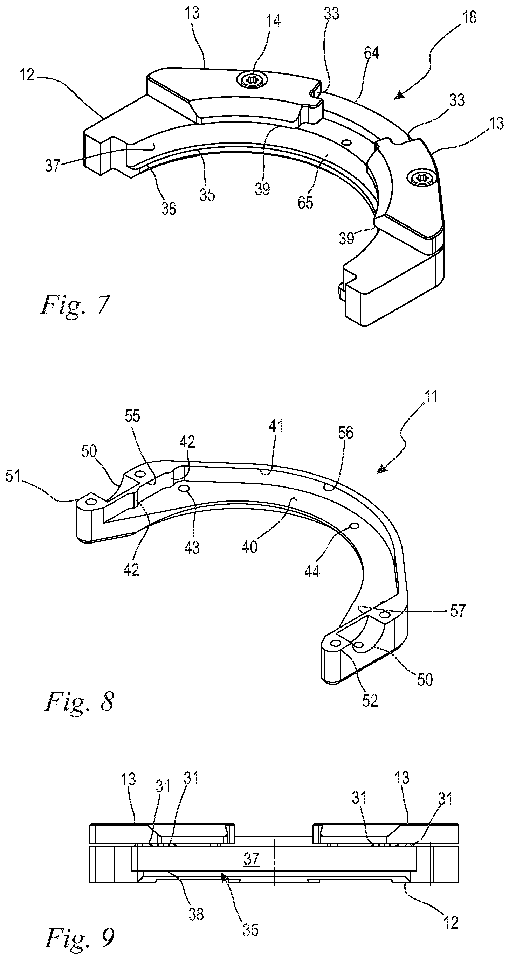

In Fig. 8 ist die Halterung 11 der Werkstückaufnahme 10 gezeigt. Die Halterung 11 weist eine Auflagefläche 40 auf, die zur Anlage der Unterseite 61 des Adapters 12 dient. Die Halterung 11 erstreckt sich bogenförmig von einem ersten Ende 51 bis zu einem zweiten Ende 52. Auf der Auflagefläche 40 ist eine Stützwand 41 vorgesehen. Die Stützwand 41 unterteilt sich in drei Abschnitte 55, 56, 57. Der erste Abschnitt 55 der Stützwand 41 ist an dem ersten Ende 51 der Halterung 11 ausgebildet. Der dritte Abschnitt 57 der Stützwand 41 ist an dem zweiten Ende 52 der Halterung 11 ausgebildet. Der erste Abschnitt 55 und der dritte Abschnitt 57 sind über den bogenförmigen zweiten Abschnitt 56 miteinander verbunden. Der erste Abschnitt 55 und der zweite Abschnitt der Stützwand 41 sind im Wesentlichen parallel zueinander ausgerichtet. Die Stützwand 41 ist vorzugsweise senkrecht zur Auflagefläche 41 ausgerichtet. Die Halterung 11 ist vorzugsweise aus einem Metallwerkstoff, insbesondere aus einer Aluminiumlegierung, gebildet.

Wie in Fig. 8 gezeigt, sind an dem ersten Abschnitt 55 der Stützwand 41 zwei Anschläge 42 vorgesehen. Die Anschläge 42 sind als Vorsprünge der Stützwand 41 ausgebildet. Es kann auch zweckmäßig sein, die zwei Anschläge 42 alternativ an dem dritten Abschnitt 57 der Stützwand 41 vorzusehen. In ungeschwenkter Ausrichtung der Werkstückaufnahme 10 bilden die zwei Anschläge 42 eine Begrenzung des Adapters 12 hinsichtlich des x-Freiheitsgrades. Der zweite Abschnitt 56 der Stützwand 41 bildet für den Adapter 12 eine Begrenzung des y-Freiheitsgrades. Die Auflagefläche 40 stellt die Begrenzung des z-Freiheitsgrades dar. Damit ist die Ausrichtung des Adapters 12 gegenüber der Halterung 11 in allen Raumrichtungen bestimmt.

Zur Befestigung des Adapters 12 auf der Halterung 11 ist der Adapter mit seiner Unterseite 61 auf die Auflagefläche 40 der Halterung 11 aufzulegen. Der Adapter 12 ist gegen die Anschläge 42 des ersten Abschnittes 55 der Stützwand 41 sowie den zweiten Abschnitt 56 der Stützwand 41 selbst zu schieben. Für eine zusätzliche Lagesicherung zwischen Halterung 11 und Adapter 12 ist vorzugsweise ein Passstift vorgesehen, der in die Öffnung 44 der Halterung 11 und in die Öffnung 29 des Adapters 12 greift. Anschließend können der Adapter 12 und die Halterung 11 miteinander verschraubt werden. Hierfür sind an der Halterung 11 Durchgangsbohrungen 43 vorgesehen. Der Adapter 12 ist lösbar auf der Halterung 12 befestigt. Zudem stellt die Befestigungsmethode eine ausreichende Genauigkeit bei der Ausrichtung des Adapters 12 und der Halterung 11 sicher, so dass auf ein erneutes Einrichten der Werkstückaufnahme 10, also die Anpassung der x- und y-Koordinaten der Werkstückaufnahme 10 in der Steuereinrichtung 4, verzichtet werden kann. Ferner ist auch der Wechsel verschiedener Adapter 12 möglich.

Die bogenförmige Ausbildung der Halterung 11 sowie des Adapters 12 erlauben eine Bearbeitung des Blanks 15 an dessen Umfangsseite. Der Blank 15 ist in der bogenförmigen Werkstückaufnahme 10 aufgenommen, wodurch das Fräswerkzeug an der Umfangseite des Blanks 15 zerspanen kann, ohne dabei mit der Werkstückaufnahme 10 zu kollidieren. Die bogenförmige Ausgestaltung der Werkstückaufnahme 10 und die Schwenkbarkeit der Werkstückaufnahme 10 bewirken eine Vergrößerung des effektiven Arbeitsraumes der Dentalfräsmaschine 1.

Wie in Fig. 3 gezeigt, ist die Werkstückaufnahme 10 an dem Träger 20 über zwei Wellen 53 angebunden. Mindestens eine der beiden Wellen 53 ist über den Elektromotor zum Schwenken der Werkstückaufnahme 10 angetrieben. Wie in Fig. 8 gezeigt, ist sowohl an dem ersten Ende 51 als auch an dem zweiten Ende 52 der Halterung 11 eine Aussparung vorgesehen, die eine Nabe 50 zur Anbindung an die Wellen 53 des Trägers 20 bilden. Die Naben 50 sind an einem Tragelement 54 des Trägers 20 verschraubt. Vorzugsweise ist die Halterung 11 mit den Wellen 53 in Schwenkrichtung 24 formschlüssig, beispielsweise über eine Feder-Nut-Verbindung oder einen Zylinderstift, verbunden.

Wie in den Fig. 4 und 5 gezeigt, sind im ersten Zustand 17 des Adapters 12 sämtliche Öffnungen sowie Konturen des Adapters 12, die zur Ausrichtung und Befestigung des Halters 11 sowie der Spannmittel 13 dienen, bereits vorgefertigt. Lediglich eine Kontur 35 zur Aufnahme eines Blanks 15 (Fig. 6) ist in dem ersten Zustand 17 des Adapters 12 nicht ausgebildet. Diese ist wie folgt in der Dentalfräsmaschine 1 zu fertigen:
Der Adapter 12 ist auf der Halterung 11 wie oben beschrieben zu befestigen. In der Steuereinrichtung 4 ist vorzugsweise eine Vielzahl verschiedener Fertigungsprogramme zur Fertigstellung des Adapters 12 hinterlegt. Ein Fertigungsprogramm ist seitens des Bedieners auszuwählen, das auf den entsprechenden Rohling 16 gerichtet ist und die vom Bediener gewünschte Aufnahmekontur 35 vorsieht. Das Fertigungsprogramm ist durch den Bediener zu starten, wodurch die Dentalfräsmaschine 1 die Fräsbearbeitung an dem Rohling 16 vornimmt. An dem Adapter 12 wird nun eine Aufnahmekontur 35 gefräst. Die Aufnahmekontur 35 wird an der Innenseite 65 des Adapters 12 eingefräst.

Mit Beendigung der Fräsbearbeitung umfasst der Adapter 12 eine Aufnahmekontur 35 und befindet sich somit in seinem zweiten Zustand 18, wie in Fig. 6 gezeigt. Die Aufnahmekontur 35 ist an der Innenseite 65 des Adapters ausgebildet. Aufnahmekontur 35 ist aus einer Grundwand 37 und einem an der Grundwand 37 ausgebildeten Vorsprung 38 gebildet. Sowohl die Grundwand 37 als auch der Vorsprung 38 sind an der Innenseite 65 des Adapters 12 ausgebildet. Die Grundwand 37 erstreckt sich in Richtung von der Unterseite 61 zur Oberseite 60 des Adapters 12. Der Vorsprung 38 grenzt an der Unterseite 61 des Adapters 12 an. Die Grundwand 37 verläuft von dem Adapter 12 bis zur Oberseite 60 des Adapters 12. Die Aufnahmekontur 35 ist im Ausführungsbeispiel bogenförmig, insbesondere halbkreisförmig ausgebildet. Dadurch können kreisrunde Blanks 15 in der Werkstückaufnahme 10 aufgenommen werden. In der bevorzugten Ausführungsform erstreckt sich der Vorsprung 38 entlang der gesamten Grundwand 37 des Adapters 12, also von der ersten Stirnseite 62 bis ihn zur zweiten Stirnseite 63. Es kann auch zweckmäßig sein, anstelle eines einzigen Vorsprungs 38 mehrere Vorsprünge 38 vorzusehen, die sich lediglich über Teilabschnitte entlang der Grundwand 37 des Adapters 12 erstrecken.

Selbstverständlich kann die Aufnahmekontur 35 nahezu beliebig an die Wünsche des Bedieners bzw. an die Gegenkontur des aufzunehmenden Blanks 15 angepasst werden. Hierzu ist das entsprechende in der Steuereinrichtung 4 hinterlegte Fertigungsprogramm zu wählen. Alternativ kann auch ein Fertigungsprogramm durch den Bediener erstellt werden.

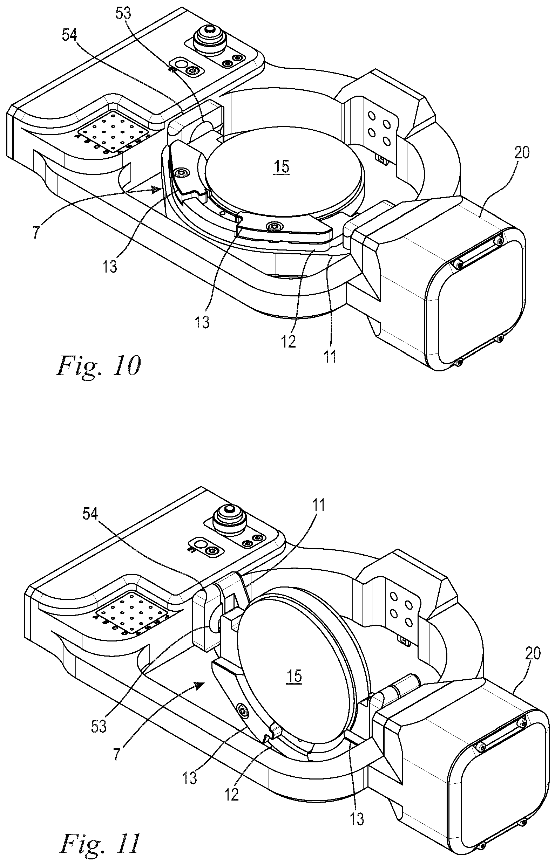

Abschließend sind die Spannmittel 13 auf der Oberseite 60 des überfrästen Adapters 12 anzuschrauben. Das Spannmittel 13 umfasst eine Klemmkontur 39. Das Spannmittel 13 ist dabei so an dem Adapter 12 angeordnet, dass die Klemmkontur 39 über die Grundwand 37 des Adapters 12 ragt. Zur Befestigung des Blanks 15 wird dieser vorzugsweise unter Anlage an der Grundwand 37 zwischen dem Vorsprung 38 des Adapters 12 und der Klemmkontur 39 des Spannmittels 13 eingeklemmt (Figuren 10 und 11). Hierzu sind die Schraubverbindungen 14 festzuziehen. Wie in Fig. 9 zu erkennen, liegen die Spannmittel 13 auf den Positionierelementen 31 des Adapters 12 auf. Dadurch wird die Auflagefläche zwischen dem Adapter 12 und dem Spannmittel 13 reduziert und somit sichergestellt, dass die Klemmkräfte auf den Blank 15 übertragen werden.

Durch das Überfräsen des Adapters 12 entfällt eine zusätzliche Kalibrierung der Dentalfräsmaschine 1. Die Aufnahmekontur 35 zur Aufnahme des Blanks ist in den Adapter 12 gefräst, wodurch die Lage der Werkstückaufnahme 10 in der Dentalfräsmaschine 1 festgelegt ist. Der Steuereinrichtung 4 der Dentalfräsmaschine 1 ist die genaue Lage der Werkstückaufnahme 10 somit bekannt, da diese der Lage der für die Fräsbearbeitung programmierten Kontur entspricht.

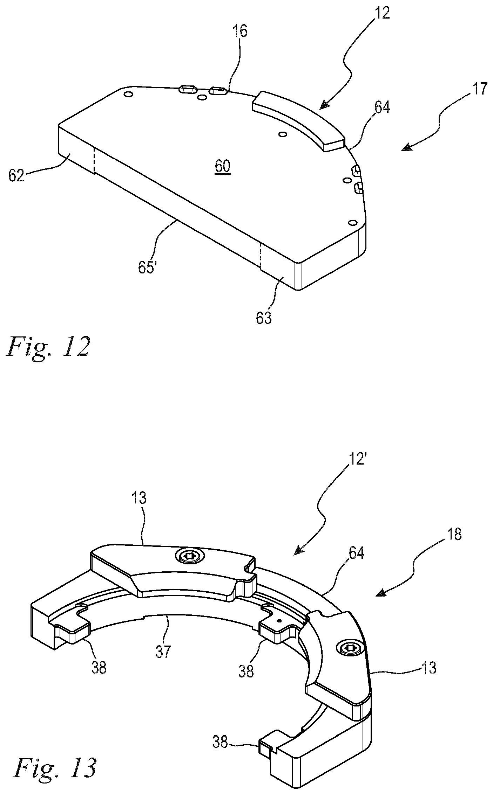

In Fig. 12 ist ein alternativer Rohling 16' gezeigt. Der Rohling 16' unterscheidet sich gegenüber dem Rohling 16 nach den Figuren 4 und 5 darin, dass die Innenseite 65' nicht analog der Außenseite 64 bogenförmig ausgebildet ist. Vielmehr ist die Innenseite 65' eben ausgebildet. Somit geht die erste Stirnseite 62 unmittelbar in die Innenseite 65' über, die dann wiederum in die zweite Stirnseite 63 verläuft. Der Vorteil dieser Ausführungsform des Rohlings 16' besteht darin, dass beliebige Aufnahmekonturen 35 in den Rohling 16 gefräst werden können. Derartige Aufnahmekonturen sind nicht auf kreisförmige Formen beschränkt, sondern können auch als Vielecke oder Freiformkonturen ausgebildet sein. Der Zugewinn an Flexibilität hinsichtlich der Ausbildung der Aufnahmekonturen geht selbstverständlich mit einem höheren Spanabtrag einher.

Wie in Fig. 13 gezeigt, kann eine bearbeitete Form des alternativen Rohlings 16' ein Adapter 12' mit drei einzelnen Vorsprüngen 38 an der Grundwand 37 sein. Die Vorsprünge 38 sind nicht miteinander verbunden. Die Vorsprünge 38 bilden eine Dreipunktauflage, wodurch eine sichere Befestigung eines Blanks 15 oder eines vergleichbaren Werkstückes gewährleistet ist. Selbstverständlich können auch andere Geometrien für den Adapter 12 zweckmäßig sein.

## Patentansprüche

1. Verfahren zum Einrichten einer Werkstückaufnahme,
mit einer Dentalfräsmaschine (1), wobei die Dentalfräsmaschine (1) eine Werkstückaufnahme (7) aufweist, wobei die Werkstückaufnahme (7) eine Halterung (11) und einen Adapter (12, 12') umfasst, wobei der Adapter (12, 12') auf der Halterung (11) befestigt ist, wobei die Werkstückaufnahme (10) mindestens ein Spannmittel (13) umfasst,
wobei der Adapter (12, 12') ein Rohling (16, 16') ist und von der Dentalfräsmaschine (1) derart überfräst wird, dass an dem Adapter (12, 12') eine Aufnahmekontur (35) zur Aufnahme eines Blanks (15) gebildet ist,
**dadurch gekennzeichnet, dass** das Spannmittel (13) dazu ausgebildet ist, den Blank (15) gegen den Adapter (12, 12') zu spannen.

2. Verfahren nach Anspruch 1,
**dadurch gekennzeichnet, dass** das mindestens eine Spannmittel (13) an dem Adapter (12, 12'), insbesondere nach dem Überfräsen des Adapters (12, 12'), befestigt wird.

3. Verfahren nach Anspruch 1 oder 2,
**dadurch gekennzeichnet, dass** bei der Bearbeitung eines Blanks (15) der Blank (15) zwischen dem Adapter (12, 12') und dem mindestens einen Spannmittel (13) gehalten ist.

4. Verfahren nach einem der Ansprüche 1 bis 3,
dass der Adapter (12, 12') aus Kunststoff, insbesondere aus Spritzguss gebildet ist.

5. Verfahren nach einem der Ansprüche 1 bis 4,
**dadurch gekennzeichnet, dass** die Halterung (11) aus Aluminium gebildet ist.

6. Verfahren nach einem der Ansprüche 1 bis 5,
**dadurch gekennzeichnet, dass** der Adapter (12, 12') lösbar auf der Halterung (11) gehalten ist.

7. Verfahren nach einem der Ansprüche 1 bis 6,
**dadurch gekennzeichnet, dass** die Halterung (11) mindestens einen seitlichen Anschlag (42) zur Anlage des Adapters (12, 12') aufweist.

8. Verfahren nach einem der Ansprüche 1 bis 7,
**dadurch gekennzeichnet, dass** die Halterung (11) und der Adapter (12, 12') über einen Passstift zueinander ausgerichtet sind.

## Claims

1. Method for setting up a workpiece receptacle,
with a dental milling machine (1), wherein the dental milling machine (1) has a workpiece receptacle (7), wherein the workpiece receptacle (7) comprises a holder (11) and an adapter (12, 12'), wherein the adapter (12, 12') is fastened to the holder (11), wherein the workpiece receptacle (10) comprises at least one clamping means (13),
wherein the adapter (12, 12') is a blank (16, 16') and is milled over by the dental milling machine (1) in such a way that a receiving contour (35) for receiving a blank (15) is formed on the adapter (12, 12'),
**characterized in that** the clamping means (13) is designed to clamp the blank (15) against the adapter (12, 12').

2. Method according to Claim 1,
**characterized in that** the at least one clamping means (13) is fastened to the adapter (12, 12'), in particular after the adapter (12, 12') has been milled over.

3. Method according to Claim 1 or 2,
**characterized in that**, when machining a blank (15), the blank (15) is held between the adapter (12, 12') and the at least one clamping means (13).

4. Method according to any of Claims 1 to 3,
**characterized in that** the adapter (12, 12') is formed from plastic, in particular from injection moulding material.

5. Method according to any of Claims 1 to 4,
**characterized in that** the holder (11) is formed from aluminium.

6. Method according to any of Claims 1 to 5,
**characterized in that** the adapter (12, 12') is held detachably on the holder (11).

7. Method according to any of Claims 1 to 6,
**characterized in that** the holder (11) has at least one lateral stop (42) for abutment of the adapter (12, 12').

8. Method according to any of Claims 1 to 7,
**characterized in that** the holder (11) and the adapter (12, 12') are aligned with one another by way of a dowel pin.

## Revendications

1. Procédé de montage d'un porte-pièce,
avec une fraiseuse dentaire (1), la fraiseuse dentaire (1) comportant un porte-pièce (7), le porte-pièce (7) comprenant un support (11) et un adaptateur (12, 12'), l'adaptateur (12, 12') étant fixé sur le support (11), le porte-pièce (10) comprenant au moins un moyen de serrage (13),
l'adaptateur (12, 12') étant une ébauche (16, 16') et étant fraisé par la fraiseuse dentaire (1) de telle manière qu'un contour de réception (35) destiné à recevoir une pièce brute (15) est formé sur l'adaptateur (12, 12'),
**caractérisé en ce que** le moyen de serrage (13) est formé pour serrer la pièce brute (15) contre l'adaptateur (12, 12').

2. Procédé selon la revendication 1,
**caractérisé en ce que** l'au moins un moyen de serrage (13) est fixé sur l'adaptateur (12, 12'), en particulier après le fraisage de l'adaptateur (12, 12').

3. Procédé selon la revendication 1 ou 2,
**caractérisé en ce que**, lors de l'usinage d'une pièce brute (15), la pièce brute (15) est maintenue entre l'adaptateur (12, 12') et l'au moins un moyen de serrage (13).

4. Procédé selon l'une des revendications 1 à 3,
**caractérisé en ce que** l'adaptateur (12, 12') est formé à partir de matière plastique, en particulier à partir d'une pièce moulée par injection.

5. Procédé selon l'une des revendications 1 à 4,
**caractérisé en ce que** le support (11) est formé à partir d'aluminium.

6. Procédé selon l'une des revendications 1 à 5,
**caractérisé en ce que** l'adaptateur (12, 12') est maintenu de manière amovible sur le support (11).

7. Procédé selon l'une des revendications 1 à 6,
**caractérisé en ce que** le support (11) comporte au moins une butée latérale (42) pour l'appui de l'adaptateur (12, 12').

8. Procédé selon l'une des revendications 1 à 7,
**caractérisé en ce que** le support (11) et l'adaptateur (12, 12') sont alignés l'un par rapport à l'autre par un goujon d'assemblage.
